# EUROPÄISCHE PATENTANMELDUNG

(11) **EP 1 790 530 A1**
(43) Veröffentlichungstag der Anmeldung: **30.05.2007**
(21) Anmeldenummer: 06019803.3
(22) Anmeldetag: 24.11.2005
(51) Int. Cl.: B60R 11/02, G07B 15/00

(54) **Modulare Baueinheit zum Einbau in ein Kraftfahrzeug**

(62) Teilanmeldung aus: 05025680.9
(71) Anmelder: Delphi Technologies, Inc., Troy, Michigan 48007 (US)
(72) Erfinder: Gieseke, Arnold, 31180 Giesen (DE)
(74) Vertreter: Manitz, Finsterwald & Partner GbR

(57) **Zusammenfassung**

Die vorliegende Erfindung betrifft eine modulare Baueinheit zum Einbau in einen Einbauschacht nach DIN ISO 7736 in ein Kraftfahrzeug, welche aus wenigstens zwei miteinander verbindbaren Modulen (12,12') besteht, wobei wenigstens eines der Module ein digitaler Fahrtenschreiber, ein Mautgerät und/oder ein Navigationssystem ist. Die Module weisen jeweils mechanische Befestigungsmittel auf, über die sie insbesondere paarweise so zu der Baueinheit verbindbar sind, dass diese in den Einbauschacht einbaubar ist. Die zwei Module (12,12') weisen jeweils ein Displayelement auf, wobei die Displayelemente den beiden Module (12,12') gemeinsam ein von beiden Modulen (12,12') verwendbares Display den Baueinheit (10) bilden.

## Beschreibung

Die vorliegende Erfindung betrifft eine modulare Baueinheit zum Einbau in einen Einbauschacht nach DIN ISO 7736 in ein Kraftfahrzeug, nach dem Oberbegriff des Anspruchs 1 ( vgl. EP-A-1 538 572).

In derartige Einbauschächte, welche im Allgemeinen im Armaturenbrett des Fahrzeuges untergebracht sind, werden nicht nur Autoradios und Geräte zum Abspielen von Tonträgern, sondern auch Navigationsgeräte und insbesondere in Lastkraftwagen Fahrtenschreiber oder Mautgeräte eingebaut. Bisher wird in einen Einbauschacht jeweils ein Gerät eingebaut. Aufgrund der zunehmenden Anzahl von in einem Kraftfahrzeug benötigten bzw. gewünschten Einbaugeräten reicht ein solcher Einbauschacht gerade bei Lastkraftwagen heutzutage in den wenigsten Fällen aus, so dass häufig eine Vielzahl von Einbauschächten nötig ist. Dies führt jedoch zu erheblichen Platzproblemen.

Gewisse Geräte, wie beispielsweise digitale Fahrtenschreiber oder Mautgeräte, müssen im übrigen aufgrund gesetzlicher Vorschriften in dem Fahrzeug eingebaut werden, um Manipulationen auszuschließen, so dass derartige Einbaugeräte nicht ohne weiteres von einem Benutzer montiert bzw. demontiert werden können. Daher ist es mit hohem Aufwand verbunden, ein in einem Einbauschacht montiertes Gerät gegen ein anderes Gerät auszutauschen. Verschiedene Mautgeräte, welche an unterschiedliche Mautsysteme angepasst sind jeweils bei Bedarf zu montieren, ist somit keine zufrieden stellende Lösung.

Der vorliegenden Erfindung liegt die Aufgabe zugrunde, eine Baueinheit mit einem verbesserten Display zu schaffen.

Diese Aufgabe wird erfindungsgemäß durch die Merkmale des Anspruchs 1 gelöst.

Die Erfindung erlaubt also den Einbau von zwei oder mehr Geräten in einen einzigen Einbauschacht. Es können beispielsweise ein digitaler Fahrtenschreiber und ein Mautgerät mit Hilfe der mechanischen Befestigungsmittel, gegebenenfalls unter Verwendung eines weiteren Befestigungselementes, aneinander befestigt werden, so dass sie gemeinsam eine Baueinheit bilden, die wie ein herkömmliches Einbaugerät in den Einbauschacht eingebaut werden kann. Die oben erwähnte Sicherung gegen Manipulationen kann dabei ebenso wie bei einem herkömmlichen Einbaugerät gewährleistet werden, da die Module jeweils einzeln versiegelt werden können.

Im Prinzip sind beliebige Kombinationen von Modulen denkbar, beispielsweise kann, wie bereits erwähnt, ein digitaler Fahrtenschreiber mit einem Mautgerät oder auch mit einem Navigationssystem eine Baueinheit bilden.

Es kann sich aber auch bei dem ersten Modul um ein an ein erstes Mautsystem angepasstes Mautgerät handeln, und bei dem zweiten Modul um ein an ein zweites Mautsystem angepasstes Mautgerät handeln. Eine solche Kombination ermöglicht es, mit einem Fahrzeug verschiedene Länder mit unterschiedlichen Mautsystemen zu befahren, und diese Mautsysteme zu nutzen, ohne dass beim Grenzübertritt ein Austausch des Mautgerätes nötig wäre.

Die Module müssen nicht notwendigerweise Geräte sein, sondern es kann sich auch bei einem der Module um ein leeres Gehäuse handeln. Falls nur ein Gerät benötigt wird, kann dieses ein erstes Modul bilden, und das zweite Modul von einem leeren Gehäuse gebildet werden, um den Zusammenbau zu einer Baueinheit und deren anschließenden Einbau überhaupt erst zu ermöglichen. Falls der Fahrer zu einem späteren Zeitpunkt ein weiteres Gerät benötigt, so kann er die Baueinheit demontieren und das leere Gehäuse gegen das gewünschte Gerät austauschen.

Neben den bereits erwähnten mechanischen Befestigungsmitteln können die Module auch jeweils miteinander zusammenwirkende elektrische Anschlusselemente aufweisen. Es kann sich beispielsweise um einen einfachen Stecker an dem ersten Modul und eine korrespondierende Buchse an dem zweiten Modul handeln. Mit Hilfe dieser elektrischen Anschlusselemente kann eine elektrische Verbindung zwischen den beiden Modulen hergestellt werden. Diese kann beispielsweise dazu genutzt werden, um ein Modul, welches nicht über einen eigenen Anschluss an das Bordnetz des Fahrzeuges verfügt, über ein erstes, an das Bordnetz anschließbares Modul mit Spannung zu versorgen.

Nach einer bevorzugten Ausführungsform der Erfindung weisen die Module Schnittstellen zur Übertragung von Daten von einem Modul zu einem anderen Modul auf. Über eine solche Schnittstelle können beispielsweise Positions-Daten oder eine Information über die Geschwindigkeit des Fahrzeuges von einem Modul an das andere übertragen werden.

Nach einer bevorzugten Ausführungsform der Erfindung weist eines der Module Mittel zur Entschlüsselung und/oder Verarbeitung eines verschlüsselten Tachoimpulssignals auf, und es ist eine Schnittstelle vorgesehen, über welche die entschlüsselten und/oder verarbeiteten Daten an ein weiteres Modul übertragbar sind. Sowohl digitale Fahrtenschreiber als auch Mautgeräte benötigen eine Information über die Geschwindigkeit des Fahrzeuges, welche aus einem aus Sicherheitsgründen verschlüsselten Tachoimpulssignal gewonnen wird. Wenn zwei Geräte, die derartige Informationen benötigen, in einer Baueinheit miteinander kombiniert werden, können Kosten und Einbauraum eingespart und die nötige Rechenleistung minimiert werden, indem die nötige Entschlüsselung und/oder Verarbeitung nur einmal in einem der beiden Module durchgeführt wird.

Nach der Erfindung umfasst die modulare Baueinheit zwei Module, die beide jeweils ein Displayelement aufweisen, wobei die Displayelemente der beiden Module gemeinsam ein von beiden Modulen verwendbares Display der Baueinheit bilden. Beispielsweise bei Navigationssystemen ist ein großes Display vorteilhaft, und dieses kann auf die beschriebene Weise von den beiden Modulen gemeinsam gebildet werden. Die auf dem Display anzuzeigenden Daten können dann über entsprechende Schnittstellen zur Datenübertragung von einem Modul zu dem anderen übertragen werden.

Ganz allgemein können verschiedene Elemente der Frontblende von den beiden Modulen geteilt werden. So ist es beispielsweise auch möglich, dass nur eines der Module ein Display aufweist, und die Module untereinander über Datenübertragungsanschlüsse so miteinander verbindbar sind, dass das Display von beiden Modulen gemeinsam benutzt werden kann. In gleicher Weise können auch Bedienelemente oder eine Bedieneinheit wie beispielsweise eine Tastatur von beiden Modulen gemeinsam verwendet werden.

Gemäß einer besonders vorteilhaften Ausführungsform der Erfindung besteht die modulare Baueinheit aus zwei quaderförmigen Modulen. Aufgrund der sich dadurch ergebenden vielen Kombinationsmöglichkeiten ist es besonders vorteilhaft, wenn beide Module die gleichen Außenmaße aufweisen. Die Außenmaße der Module sind dabei vorteilhafterweise so gewählt, dass die Baueinheit aus den miteinander verbundenen Modulen Außenmaße besitzt, welche den Innenmaßen des Einbauschachtes nach DIN ISO 7736 entsprechen.

Es ist beispielsweise möglich, das in dem Einbauschacht zur Verfügung stehende Volumen in horizontaler Richtung zu teilen, d.h. zwei Module zu verwenden, die jeweils nur halb so hoch sind wie ein herkömmliches Einbaugerät. Ebenso ist es aber möglich, eine vertikale Teilung des zur Verfügung stehenden Einbauraumes vorzunehmen, d.h., zwei Module zu verwenden, die jeweils nur halb so breit wie ein herkömmliches Einbaugerät sind.

Die mechanische Verbindung zwischen den beiden Modulen kann beispielsweise über einen Montagerahmen hergestellt werden, der die Baueinheit und somit die Module umgreift, wobei die mechanischen Befestigungselemente der Module dann mit dem Montagerahmen zusammenwirken. Ein solcher Montagerahmen kann zusätzlich zu einer direkten mechanischen Verbindung der Module aneinander verwendet werden, oder er kann eine solche ersetzen. Beispielsweise können in den Montagerahmen Rastausnehmungen vorgesehen sein, welche mit dazu passenden, außenseitig angebrachten Rastnasen der Module zusammenwirken. Ein solcher Montagerahmen kann die Module unabhängig von deren Art, Anzahl und Form auf einfache und zuverlässige Weise miteinander verbinden.

Der Montagerahmen kann zudem außenseitig über Befestigungselemente zur Befestigung der Baueinheit in dem Einbauschacht verfügen, und somit den Einbau der Baueinheit erleichtern.

Im Folgenden soll die vorliegende Erfindung anhand eines bevorzugten Ausführungsbeispiels und unter Bezugnahme auf die beiden beigefügten Figuren näher beschrieben werden.

Die Figuren zeigen dabei im Einzelnen:
- Fig. 1:: eine perspektivische Ansicht zweier Module vor deren Zusammenbau zu einer Baueinheit, und
- Fig. 2:: eine aus den beiden Modulen aus Fig. 1 gebildete Baueinheit mit einem Montagerahmen.

Die in den beiden Figuren dargestellte modulare Baueinheit 10 besteht aus zwei Modulen 12, 12', die beide quaderförmig sind. Beide Module 12, 12' besitzen identische Außenmaße, wobei die Außenmaße der fertigen Baueinheit 10 den Innenmaßen eines Einbauschachtes nach DIN ISO 7736 entsprechen. Jedes Modul 12, 12' ist halb so hoch wie ein herkömmliches Einbaugerät für einen Einbauschacht nach DIN ISO 7736, besitzt ansonsten aber im Wesentlichen die gleichen Abmessungen.

Bei beiden Modulen 12, 12' handelt es sich um Geräte zum Einbau in eine Kraftfahrzeug, beispielsweise ein um Navigationssystem, ein Mautgerät, einen digitaler Fahrtenschreiber oder auch ein Autoradio. Beliebige Geräte können miteinander kombiniert werden, und es ist für die Erfindung nicht von Bedeutung, welche Geräte ausgewählt werden.

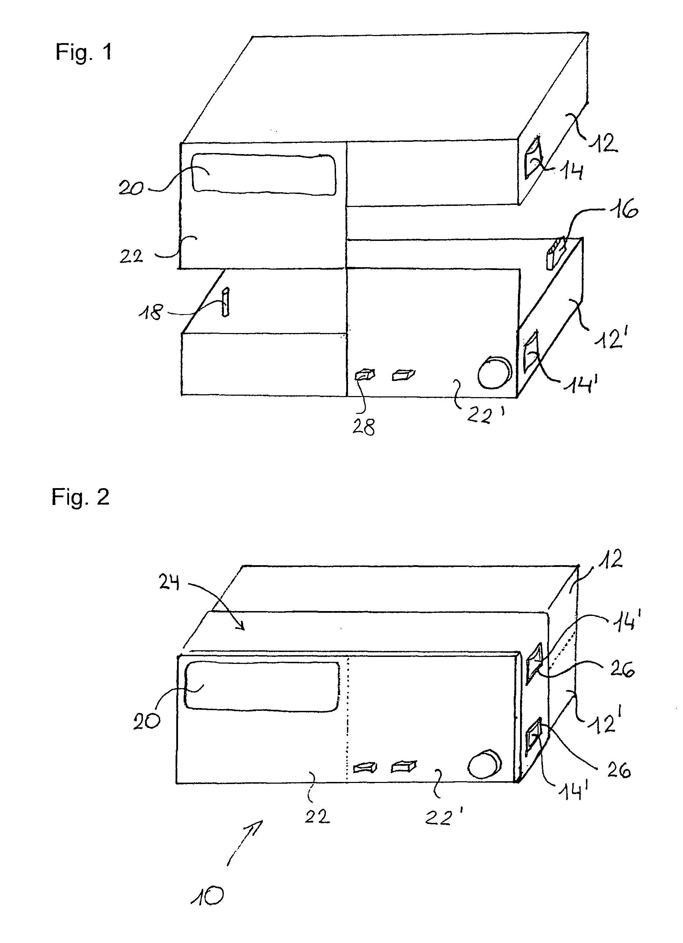

Beide Module 12, 12' besitzen an ihrer Vorderseite jeweils ein Blendenelement 22, 22', das sich nur über die halbe Breite des jeweiligen Moduls 12 bzw. 12' erstreckt. Die Höhe der Blendenelemente 22, 22' entspricht der doppelten Höhe der einzelnen Module 12, 12', so dass bei miteinander verbundenen Modulen (vgl. Fig. 2) jeweils eine Hälfte einer Vorderseite jedes Moduls 12, 12' von einem Blendenelement 22, 22' des jeweils anderen Moduls 12', 12 verdeckt wird. Gemeinsam bilden die beiden Blendenelemente 22, 22' somit eine komplette Frontblende für die Baueinheit 10, wie in Fig. 2 erkennbar ist. Dadurch, dass die Frontblende in vertikaler Richtung geteilt ist, während die Module 12, 12' übereinander angeordnet sind, wird eine zusätzliche Stabilisierung der Baueinheit 10 erreicht.

Das Blendenelement 22 des in den Figuren oben dargestellten Moduls 12 ist mit einem Display 20 versehen, während das Blendenelement 22' des zweiten, in den Figuren unten liegenden Moduls 12' mit Bedienelementen 28 versehen ist.

Das untere Modul 12' ist sowohl mit einem Anschlussstift 18 zum Herstellen einer elektrischen Verbindung zwischen den beiden Modulen 12, 12', als auch mit einem Datenübertragungsanschluss 16 versehen. Entsprechende, in den Figuren nicht dargestellte Anschlussbuchsen sind an der Unterseite des oberen Moduls 12 vorgesehen.

Über den Datenübertragungsanschluss 16 können beispielsweise Daten von dem nicht mit einem Display ausgestatteten Modul 12' zu dem über ein Display 20 verfügendes Modul 12 übertragen werden, so dass das Display 20 von beiden Modulen 12, 12' verwendet werden kann. In gleicher Weise können auch Daten übertragen werden, welche eine Bedienung des nicht über eigene Bedienelemente verfügenden Moduls 12 über die an dem anderen Modul 12' vorgesehenen Bedienelemente 28 ermöglichen.

Eines der beiden Module 12, 12' ist mit einem elektrischen Anschluss zum Anschließen des Moduls an ein Bordnetz des Fahrzeuges zur Spannungsversorgung versehen, der in den Figuren nicht dargestellt ist. Das andere Modul benötigt keinen derartigen Anschluss, sondern kann über den elektrischen Anschlussstift 18 mit der benötigten Spannung versorgt werden.

Gleichzeitig wird über den Datenübertragungsanschluss 16 und den Anschlussstift 18 auch eine mechanische Steckverbindung zwischen den beiden Modulen 12, 12' hergestellt.

An den Außenseiten der Module 12, 12' sind Rastnasen 14, 14' angebracht, die in korrespondierende Aussparungen 26, 26' in einem in Fig. 2 dargestellten Montagerahmen 24 einrasten können. Durch die Verrastung der beiden Module mit dem Montagerahmen wird somit eine mechanische Verbindung zwischen den einzelnen Bestandteilen der Baueineinheit 10 hergestellt. Der Montagerahmen 24 greift, wie man in Fig. 2 erkennt, um die beiden aufeinander gesetzten Module 12, 12' und ist in etwa halb so tief wie die gesamte Baueinheit 10. Vorzugsweise ist der Montagerahmen 24 aus Metall hergestellt und verfügt über in den Figuren nicht dargestellte weitere Befestigungselemente, welche zur Befestigung der Baueinheit in dem Einbauschacht dienen.

Zur Montage der Baueinheit setzt man zunächst die beiden in Fig. 1 separat dargestellten Module 12, 12' aufeinander, wobei die korrekte Ausrichtung sowohl durch die Displayelemente 22, 22' als auch durch den elektrischen Anschlussstift 18 und den Datenübertragungsanschluss 16 und die jeweils dazugehörigen Anschlussbuchsen vorgegeben ist. Wenn die beiden Module 12, 12' aufeinander gesetzt sind, können sie dank des Anschlussstiftes 18 und des Anschlusses 16 nicht mehr in einer horizontalen Ebene gegeneinander verschoben werden.

Zur Herstellung einer festen mechanischen Verbindung zwischen den beiden Modulen 12, 12' wird in einem weiteren Montageschritt der oben bereits beschriebene Montagerahmen 24 von hinten auf die beiden Module 12, 12' aufgeschoben, bis die an den Modulen außenseitig ausgebildeten Rastnasen 14, 14' in den Rastöffnungen 26, 26' des Montagerahmens einrasten.

Nachdem die beiden Module 12, 12' über den Montagerahmen 24 aneinander befestigt sind, kann die gesamte Baueinheit 10 vorschriftsmäßig in dem Einbauschacht eingebaut und gegebenenfalls verplombt werden.

Ein Ausbau eines einzelnen Moduls aus dem Einbauschacht ist durch die geschickte Anordnung der Displayelemente 22, 22', durch die Verbindung über den Anschlussstift 18 und den Datenübertragungsanschluss 16 und auch durch den Montagerahmen 24 nicht möglich. Die beiden Module 12, 12' können also weder separat entnommen noch manipuliert werden.

### Bezugszeichenliste

- 10: Baueinheit
- 12, 12': Modul
- 14, 14': Rastnase
- 16: Datenübertragungsanschluss
- 18: elektrischer Verbindungsstift
- 20: Display
- 22, 22': Blendenelement
- 24: Montagerahmen
- 26: Aussparung in Montagerahmen 24
- 28: Bedienelement

## Patentansprüche

1. Modulare Baueinheit zum Einbau in einen Einbauschacht nach DIN ISO 7736 in ein Kraftfahrzeug, welche aus wenigstens zwei miteinander verbindbaren Modulen (12, 12') besteht, wobei wenigstens eines der Module (12, 12') ein digitaler Fahrtenschreiber, ein Mautgerät und/oder ein Navigationssystem ist, und die Module (12, 12') jeweils mechanische Befestigungsmittel (14, 14') aufweisen, über die sie insbesondere paarweise zu der Baueinheit (10) so verbindbar sind, dass diese in den Einbauschacht einbaubar ist,
**dadurch gekennzeichnet,**
**dass** die Baueinheit zwei Module (12, 12') umfasst, die beide jeweils ein Displayelement aufweisen, wobei die Displayelemente der beiden Module (12, 12') gemeinsam ein von beiden Modulen (12, 12') verwendbares Display der Baueinheit (10) bilden.

2. Modulare Baueinheit nach Anspruch 1,
**dadurch gekennzeichnet,**
**dass** die Module (12, 12') jeweils miteinander zusammenwirkende elektrische Anschlusselemente (18) aufweisen.

3. Modulare Baueinheit nach Anspruch 2,
**dadurch gekennzeichnet,**
**dass** das erste Modul (12) einen elektrischen Anschluss zum Anschließen des Moduls an ein Bordnetz des Fahrzeuges zur Spannungsversorgung umfasst, und das zweite Modul (12') so mit dem ersten Modul (12) verbindbar ist, dass auch das zweite Modul (12') über das erste Modul (12) an das Bordnetz angeschlossen ist.

4. Modulare Baueinheit nach einem der vorstehenden Ansprüche,
**dadurch gekennzeichnet,**
**dass** eines der Module (12, 12') ein leeres Gehäuse ist.

5. Modulare Baueinheit nach einem der vorstehenden Ansprüche,
**dadurch gekennzeichnet,**
**dass** sie aus genau zwei Modulen (12, 12') besteht, wobei beide Module (12, 12') ein digitaler Fahrtenschreiber, ein Mautgerät und/oder ein Navigationssystem sind.

6. Modulare Baueinheit nach einem der vorstehenden Ansprüche,
**dadurch gekennzeichnet,**
**dass** das erste Modul (12) ein an erstes Mautsystem (12) angepasstes Mautgerät ist, und das zweite Modul (12') ein an ein zweites Mautsystem angepasstes Mautgerät ist.

7. Modulare Baueinheit nach einem der vorstehenden Ansprüche,
**dadurch gekennzeichnet,**
**dass** die Module (12, 12') Schnittstellen(16) zur Datenübertragung von einem Modul (12, 12') zu einem anderen Modul (12', 12) aufweisen.

8. Modulare Baueinheit nach einem der vorstehenden Ansprüche,
**dadurch gekennzeichnet,**
**dass** eines der Module (12) Mittel zur Entschlüsselung und/oder Verarbeitung eines verschlüsselten Tachoimpulssignales aufweist, und dass eine Schnittstelle (16) vorgesehen ist, über welche die entschlüsselten und/oder verarbeiteten Daten an ein weiteres Modul (12') übertragbar sind.

9. Modulare Baueinheit nach einem der vorstehenden Ansprüche,
**dadurch gekennzeichnet,**
**dass** jeweils nur eines der Module (12, 12') ein Display (20) und/oder eine Bedieneinheit aufweist, und die Module (12, 12') der Baueinheit (10) über Datenübertragungsanschlüsse (16) so miteinander verbindbar sind, dass das Display (20) und/oder die Bedieneinheit von allen Modulen (12, 12') verwendbar ist bzw. sind.

10. Modulare Baueinheit nach einem der vorstehenden Ansprüche,
**dadurch gekennzeichnet,**
**dass** sie aus zwei quaderförmigen Modulen (12, 12') besteht, wobei insbesondere beide Module (12, 12') identische Außenmaße besitzen, und die Außenmaße der Baueinheit (10) den Maßen eines Einbauschachtes nach DIN ISO 7736 entsprechen.

11. Modulare Baueinheit nach einem der vorstehenden Ansprüche,
**dadurch gekennzeichnet,**
**dass** die Module (12, 12') über einen die Baueinheit umgreifenden Montagerahmen (24), der mit den mechanischen Befestigungselemente (14) der Module (12, 12') zusammenwirkt, miteinander mechanisch verbindbar sind.

12. Modulare Baueinheit nach Anspruch 11,
**dadurch gekennzeichnet,**
**dass** die Außenabmessungen des Montagerahmens (24) den Innenabmessungen des Einbauschachtes entsprechen und dass der Montagerahmen Befestigungselemente zur Befestigung der Baueinheit in dem Einbauschacht aufweist.
